(19) Europäisches Patentamt

European Patent Office

Office européen des brevets

(11) **EP 1 486 758 A2**

(12) **EUROPEAN PATENT APPLICATION**

(43) Date of publication:
**15.12.2004 Bulletin 2004/51**

(51) Int Cl.7: **G01B 11/24**, G01B 11/02

(21) Application number: **04013672.3**

(22) Date of filing: **09.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **09.06.2003 JP 2003163976**

(71) Applicant: **Mitutoyo Corporation**
**Kawasaki-shi, Kanagawa 213-8533 (JP)**

(72) Inventor: **Yoshida, Hiroyuki**
**Takatsu-ku Kawasaki-shi**
**Kanagawa213-8533 (JP)**

(74) Representative: **Grünecker, Kinkeldey,**
**Stockmair & Schwanhäusser Anwaltssozietät**
**Maximilianstrasse 58**
**80538 München (DE)**

(54) **Image measuring method and image measuring device**

(57) An image measuring method according to the present invention comprises an illuminance computing step of computing illuminance of a workpiece (W) based on an indicated value set and inputted from the outside as well as on luminance of an illumination unit (20), and an exposure time computing step of computing an exposure time of an image pick-up unit (30). The illumination unit (20) and the image pick-up unit (30) are controlled according to the computed illuminance and exposure time to pick-up an image, so that an image satisfying both the illuminance of the workpiece (W) and an exposure time of the image pick-up unit (30) can be picked up. Therefore, even in a case in which a controllable range of luminance of the illumination device (20) is limited and the luminance can not be raised beyond the upper limit, an image having the brightness higher than the upper limit of luminance of the illumination unit (20) can be picked up by prolonging the exposure time of the image pick-up unit (30).

FIG.1

EP 1 486 758 A2

**Description**

**BACKGROUND OF THE INVENTION**

**1. FIELD OF THE INVENTION**

The present invention relates to an image measuring method and an image measuring device. More specifically, this invention relates to an image measuring method of measuring a form or the like of a workpiece with an image measuring device comprising a luminance-variable illumination unit and an image pick-up unit by irradiating illumination light from the illumination unit to the workpiece and picking-up the reflected light from the workpiece, and measuring a form or other parameters of the workpiece from the picked-up image, and also relates to the image measuring device.

**2. DESCRIPTION OF RELATED ART**

There has been known an image measuring device comprising an illumination unit for irradiating illumination light to a workpiece and an image pick-up unit for picking-up reflected light from the workpiece and capable of measuring a form, dimensions, and colors of the workpiece by subjecting the image picked-up by the image pick-up unit to image processing according to the necessity (Refer to, for instance, Japanese Patent Laid-Open Publication No. 2000-9459).

This image measuring device comprises a CCD camera for picking-up an image of a workpiece and outputting image data thereof, and a ring illumination unit for irradiating illumination light to the workpiece. This illumination unit is connected via an optical fiber cable to a light-emitting source such as a halogen lamp provided in a power supply unit.

The image measuring device further comprises an illumination control device for controlling luminance of the light-emitting source by controlling a current applied to the light-emitting source and an input section provided operable from the outside.

With the configuration as described above, when a user instructs luminance of the illumination light with the input section, the illumination control device applies a specified current to the light-emitting source so that the illumination light is irradiated with the specified luminance. The illumination light is irradiated to the workpiece with the illuminance instructed by applying a current. Then the reflected light from the workpiece is received by the CCD camera, and a form, dimensions, colors and other parameter of the workpiece can be measured by detecting edges or other parameters from the picked-up image.

In the image measurement, illumination light irradiated to a workpiece, namely illuminance of the workpiece irradiated by the illumination light is very important. For instance, when illuminance of actual illumination is lower than a specified illuminance, the light volume is insufficient and an image can not be obtained, or edge detection can not be carried out. When the illuminance of actual illumination is higher than the specified illuminance, the light is saturated, so that the image is fogged and edge detection can not be carried out also in this case.

Namely it is extremely important in fine measurement to accurately control illumination light by controlling a current applied to a light-emitting source.

On the other hand, in addition to accurate control of illumination light, it is also important that a response speed in control is high and an obliquity of the illumination light can be controlled. In a case of a halogen lamp, however, there is disadvantage that the response speed in luminance control is low. Further a halogen lamp has other disadvantages, for instance, that the power consumption is large and the service life is short. In a case of an illumination unit connected via an optical fiber cable to a light-emitting source such as a plurality of halogen lamps, the use of many halogen lamps in combination with the optical fiber cable is not preferable and hence it is difficult to control obliquity of illumination light by providing ON/OFF control over illumination light irradiated from each fiber cable.

To overcome the problems as described above, there has been proposed an image measuring device using, as a light-emitting source, a semiconductor light-emitting element (LED: Light Emitting Diode) having such advantages as a high response speed, low power consumption, and long service life and adapted to being ON/OFF controlled discretely (such as an image probe described in Japanese Patent Laid-Open Publication No. 2001-154098).

This image measuring device comprises a CCD camera, an image pick-up optical system for picking-up an image of the workpiece with the CCD camera, a reflected illumination unit for illuminating the workpiece with reflected light, and a ring illumination unit for illuminating the workpiece in the diagonal direction from a position around the image pick-up optical system. Each of the illumination units as described above has a light source comprising a plurality of light-emitting diodes, and further comprises an illumination optical system for guiding illumination light from the light source.

These illumination units are also based on the configuration as described above in which illuminance can be controlled by an illumination control device. Further the plurality of light-emitting diodes can be turned ON or OFF discretely or block by block for light adjustment, so that the illumination light can be irradiated to the workpiece in any direction. Therefore, by using light-emitting diodes as a light source, size reduction as well as weight reduction of the illumination unit can be realized, and there are provided the advantages that the control speed is higher, power consumption is smaller, and the service life is longer as compared to those in a halogen lamp.

In any of the image measuring devices based on the conventional technology as described above, however, brightness of a picked-up image is decided by luminance of a light-emitting source put under control, namely by illuminance of a workpiece, so that the brightness of obtained image can be limited within a controllable illuminance range, so that there occur the problems as described below.

Namely, when a surface of a workpiece has a color having the low reflection coefficient such as the black color, an amount of the reflected light is short and brightness of the picked-up image is insufficient, which disables edge detection.

Further when a light-emitting diode is used as a light-emitting source, the luminance of a light-emitting diode is lower as compared to that of a halogen lamp, and sometimes brightness of the image may be insufficient. Further light-emitting diodes have the individual difference specified to each product, and the luminance varies from product to product, so that luminance control is carried out according to a product having low luminance, and therefore luminance of the entire illumination unit is suppressed to a low level. It is conceivable that products each having low luminance are screened off and only light-emitting diodes each having high luminance are used, but selection of the products as described above will result in cost increase.

In addition, the following countermeasures as using a light-emitting source having higher luminance, increasing a number of installed light-emitting sources, and raising a gain (amplification factor) of a CCD camera can be considered to raise brightness of a picked-up image, but when the countermeasures as described above are taken, the problems as described below occur.

For instance, when a light-emitting diode having high luminance is used, the heat release is high, which may sometimes give negative effects over the precision in measurement. Also when a larger number of light-emitting sources are installed, the heat release becomes higher, and such problems as increase of power consumption or increase in size of the illumination unit occur. When a gain of the CCD camera is raised, noises mixed in a picked-up image increase, which will result in the lower precision in measurement.

## SUMMARY OF THE INVENTION

It is an object of the present invention to provide an image measuring method and an image measuring device enabling picking up of a bright image without using an illumination unit with high luminance.

The present invention provides an image measuring method, with use of a luminance-variable illumination unit and an image pick-up unit with variable exposure time, in which an illumination light is irradiated from the illumination unit to a workpiece, and a reflected light from and/or transmitted light through the workpiece is picked up by the image pick-up unit, so that the workpiece is measured based on a picked-up image, the method including: an illuminance computing step of obtaining illuminance of the workpiece based on luminance of the illumination unit according to an indicated value set and inputted from the outside; and an exposure time computing step of computing an exposure time for the image pick-up unit, in which, in the illuminance computing step, the illuminance is computed so that the illuminance increases up to a preset illuminance in association with increase of the indicated value when the indicated value is not higher than a prespecified indicated value, and the illuminance is kept at the preset illuminance when the indicated value is higher than the prespecified indicated value, and in which, in the exposure time computing step, the exposure time is computed so that the exposure time is kept at a preset exposure time when the indicated value is not higher than a prespecified indicated value, and the exposure time increases from the preset exposure time in association with increase of the indicated value when the indicated value is higher than the prespecified indicated value, and in which the illumination unit and the image pick-up unit are controlled according to the computed illuminance and computed exposure time for picking up the image having specified brightness obtained from a combination of the illuminance and the exposure time.

Brightness of a picked-up image is obtained by multiplying illuminance of a workpiece based on luminance of an illumination unit by an exposure time of the image pick-up unit, and even when illuminance of the workpiece is constant, brightness of the image becomes brighter by prolonging the exposure time of the image pick-up unit in proportion to the prolonged exposure time.

The prespecified indicated value can be set to any value within a range in which the prespecified indicated value is not larger than an indicated value (100% indicated value) corresponding to the maximum luminance (the maximum illuminance of the workpiece) in the range where the illumination is generally used.

With the configuration as described above, illuminance of a workpiece based on the luminance of an illumination unit and an exposure time of an image pick-up unit are computed based on an indicated value set and inputted from the outside in the illuminance computing step and the exposure time computing step respectively, and the illumination unit and the image pick-up unit are controlled according to the illuminance and the exposure time computed as described above, so that it is possible to pick-up an image of the brightness obtained by simultaneously satisfying illuminance of a workpiece and an exposure time of an image pick-up unit. Therefore, even when a control range for luminance of an illumination unit is limited and it is impossible to raise the luminance beyond the upper limit, it is possible to pick-up an image with the brightness apparently surpassing the upper limit of the luminance adjustment range for the illumination unit by simultaneously controlling the exposure time of the image pick-up unit for prolonging the exposure time.

Further, when an indicated value is not higher than a prespecified indicated value, by controlling luminance on an illumination unit to raise or lower illuminance of a workpiece and also by keeping an exposure time of an image pick-up unit at a constant value, measurement can be carried out by the method of controlling an illumination unit and the method of controlling an exposure time of an image pick-up unit like those in the conventional technology. When the indicated value is larger than the prespecified indicated value, by keeping luminance of the illumination unit at a constant value and also prolonging or shortening an exposure time of the image pick-up unit, brightness of an image can continuously be controlled. Therefore the illumination unit and the image pick-up unit are automatically controlled according to an indicated value, and also brightness of a picked-up image changes, so that the operator is not required to control the illumination unit or the image pick-up unit, and can carry out an image measurement of a workpiece only by inputting an indicated value.

In the image measuring method according to the present invention, it is preferable that, in the illuminance computing step, when the indicated value is not higher than the prespecified indicated value, the illuminance is computed so that the illuminance increases with a constant increment according to the indicated value, and in the exposure time computing step, when the indicated value is higher than the prespecified indicated value, the exposure time is computed so that the exposure time increases with a constant increment according to the indicated value and also so that brightness of the image obtained by the combination of the computed illuminance and the computed exposure time continuously increases with a constant increment according to the indicated value.

With the configuration as described above, as illuminance and an exposure time are controlled so that the illuminance and exposure time will increase with a constant increment according to an indicated value, and further as brightness of an image increases with a constant increment according to an indicated value, so that a relation between an input indicated value and brightness of an image obtained according to the indicated value can easily be grasped by a measuring person, and therefore an image with correct brightness can be obtained with quick operations, thus the operability being improved.

In the image measuring method according to the present invention, it is preferable that in the illuminance computing step, when the indicated value is not higher than the prespecified indicated value, the illuminance is computed so that the illuminance increases with an increment along a curve defined by a prespecified function according to an increment of the indicated value, and in the exposure time computing step, when the indicated value is higher than the prespecified indicated value, the exposure time is computed so that the exposure time increases with an increment along a curve defined by a prespecified function according to an increment of the indicated value and also so that brightness of the image obtained by the combination of the computed illuminance and the computed exposure time continuously increases with an increment along a curve defined by a prespecified function according to the indicated value.

With the configuration as described above, illuminance and an exposure time are controlled so that the parameters will increase with an increment along a curve defined with a prespecified function according to an indicated value, and brightness of an image continuously increases with an increment along a curve defined with a prespecified function according to an indicated value, and therefore an increment for brightness of an image can freely be set in response to a region of an indicated value, thus precision in measurement being improved. For instance, when the relation between an indicated value and brightness of an image is defined with a function for reducing an increment in a region where an indicated value is small (a dark region), brightness of an image in a dark region can be controlled finely, so that precision in measurement can be improved.

In the image measuring method according to the present invention, it is preferable that the prespecified indicated value corresponds to a maximum luminance in a range in which the illumination unit is generally used.

With the configuration as described above, by setting an indicated value (100% indicated value) corresponding to the maximum luminance in a range in which the illumination unit is generally used as a prespecified indicated value, and therefore luminance of an illumination unit can be controlled according to an indicated value not higher than the 100% indicated value within the range up to the maximum luminance, and when the indicated value surpassed the 100% indicated value, luminance of the illumination unit is kept constant at the maximum luminance. Therefore, the illumination capability of an illumination unit can effectively be utilized to its limit, so that illumination can be carried out efficiently.

In the image measuring method according to the present invention, it is preferable that the prespecified indicated value corresponds to a luminance lower by a prespecified percentage against the maximum luminance in the range where the illumination unit is generally used.

With the configuration as described above, by setting a prespecified indicated value to a value lower by a prespecified percentage than the 100% indicated value, luminance of an illumination unit is controlled in a range up to the value lower than the maximum luminance when an indicated value is not larger than the prespecified value, and the luminance of the illumination unit is kept constant at the luminance lower than the maximum luminance when the indicated value surpasses the prespecified indicated value. Therefore, even when only luminance lower by a prespecified percentage than the maximum luminance can be obtained in a light-emitting source for an illumination unit due to the individual difference for each product, desired brightness of an image can be obtained for an indicated value surpassing a prespecified indicated value by controlling an exposure time of an image pick-up unit, so that the influence of variation of performances in each light-emitting source as a product can be minimized.

The present invention provides an image measuring device comprising a luminance-variable illumination unit and an image pick-up unit with variable exposure time, in which an illumination light is irradiated from the illumination unit to a workpiece, and a reflected light from and/or transmitted light through the workpiece is picked up by the image pick-up unit, so that the workpiece is measured based on a picked-up image, the image measuring device further including: an illuminance controller for controlling illuminance of the workpiece based on luminance of the illumination unit according to an indicated value set and inputted from the outside; and an exposure time controller for controlling an exposure time for the image pick-up unit, in which the illuminance controller controls the illumination unit so that the illuminance increases up to a preset illuminance in association with increase of the indicated value when the indicated value is not higher than a prespecified indicated value, and also so that the illumination is kept at the preset illuminance when the indicated value is higher than the prespecified indicated value, and the exposure time controller controls the image pick-up unit so that the exposure time is kept at a preset exposure time when the indicated value is not higher than a prespecified indicated value, and also so that the exposure time increases from the preset exposure time in association with increase of the indicated value when the indicated value is larger than the prespecified indicated value. With the configuration as described above, the same advantages as those provided by the image measuring method according to the present invention described above can be obtained.

Namely, even when a control range for luminance of an illumination unit is limited and the luminance can not be set to a luminance larger than the upper limit, by prolonging an exposure time of an image pick-up unit, it is possible to pick up an image with the brightness apparently surpassing the upper limit of illuminance based on the maximum luminance. Further the illumination unit and the image pick-up unit are automatically controlled according to an indicated value, so that a measuring person is not required to control the illumination unit or the image pick-up unit discretely, and a measurement workpiece can easily be carried out only by inputting an indicated value.

In the image measuring device according to the present invention, it is preferable that the indicated value is not higher than the prespecified indicated value, the illuminance controller controls the illumination unit so that the illuminance increases with a constant increment according to the indicated value, and when the indicated value is higher than the prespecified indicated value, the exposure time controller controls the image pick-up unit so that the exposure time increases with a constant increment according to the indicated value and also so that brightness of the image obtained by the combination of the computed illuminance and the computed exposure time continuously increases with a constant increment according to the indicated value.

With the configuration as described above, the same advantages as those provided by the above-described invention.

Namely a relation between an input indicated value and brightness of an image obtained according to the indicated value can easily be grasped by a person responsible for measurement, and an image with desired brightness of the image can be obtained with quick operations, thus the operability being improved.

In the image measuring device according to the present invention, it is preferable that, when the indicated value is not higher than the prespecified indicated value, the illuminance controller controls the illumination unit so that the illuminance increases with an increment along a curve defined by a prespecified function according to the indicated value, and when the indicated value is higher than the prespecified indicated value, the exposure time controller controls the image pick-up unit so that the exposure time increases with an increment along a curve defined by a prespecified function according to an increment of the indicated value and also so that brightness of the image obtained by the combination of the computed illuminance and the computed exposure time continuously increased along a curve defined by a prespecified function according to the indicated value.

With the configuration as described above, the same advantages as those provided by the above-described invention can be obtained.

Namely an increment of brightness of an image can freely be set with a prespecified function in correspondence to a region of an indicated value, so that precision in measurement can be improved.

In the image measuring device according to the present invention, the illumination unit preferably includes a plurality of semiconductor light-emitting elements.

With the configuration as described above, the image measuring device according to the present invention includes a plurality of semiconductor elements as a light-emitting source, so that reduction in both the size and weight of an illumination unit can be realized, and a higher control speed, smaller power consumption, and longer service life can be realized as compared to those provided when a halogen lamp is used.

In the image measuring device according to the present invention, the image pick-up unit preferably includes a camera having a solid state image pick-up element.

As the camera having a solid state image pick-up element, for instance, a CCD (Charge-Coupled Device) camera, a CMOS device (Complementary Metal-Oxide Semiconductor device) camera may be employed.

With the configuration as described above, an image of a workpiece picked-up with a CCD camera or the like can quickly be transferred as image data for subjecting the image data to image processing or the like, so that the efficiency in a measurement workpiece can be improved. When a CCD camera or the like is used, it is easy to control the exposure time with an electric control signal, and therefore control over an exposure time can be carried out more accurately as compared to an ordinary camera having a shutter device or the like based on a mechanical system. Further with the CCD camera or the like, images can be picked up successively at a prespecified frame rate, so that the operations from a step of inputting an indicated value up to a step of checking brightness of an image can be carried out successively, and therefore the efficiency in a measurement workpiece can further be improved.

The image measuring device according to the present invention preferably has a computer comprising an input unit for inputting the indicated value; a storage unit for storing therein a relation among the indicated value, the illuminance, and the exposure time when the illumination unit and the image pick-up unit are controlled; a computing unit for computing illuminance and exposure time based on an indicated value inputted with the input unit as well as on the relation among the indicated value, the illuminance, and the exposure time stored in the storage unit; an image processor for processing the picked-up image; and a display unit for displaying thereon the image processed by the image processor, and in this image measuring device, the illuminance controller is integrated with the computer or is separately provided and controls the illumination unit according to the illuminance computed by the computing unit; and the exposure time controller is integrated with the computer or is separately provided and controls the image pick-up unit according to the exposure time computed by the computing unit.

A relation among an indicated value, illuminance, and an exposure time stored in the storage unit may be a relational expression for computing illuminance and an exposure time according to an indicated value as a parameter, or may be a table showing combinations of illuminance and an exposure time for various indicated values.

With the configuration as described above, by computing illuminance and an exposure time with a computing unit (such as a CPU) based on the relation among an indicated value, illuminance, and an exposure time stored in a storage unit (such as a memory or a hard disk) provided in a computer, illuminance and an exposure time can quickly be computed from an indicated value inputted with an input section (such as a keyboard, buttons, or a lever), so that time required for measurement can be shortened with the efficiency in a measurement workpiece improved.

## BRIEF DESCRIPTION OF THE DRAWINGS

Fig. 1 is a view showing general configuration of an image measuring device according to a first embodiment of the present invention;
Fig. 2 is a block diagram showing configuration of the image measuring device;
Fig. 3A to Fig, 3C are views each showing a relation among an indicated value, illuminance, an exposure time, and brightness of an image in the image measuring device respectively,
Fig. 4 is a flow chart showing an image measuring method with the image measuring device;
Fig. 5A to Fig. 5C are views each showing a relation among an indicated value, illuminance, an exposure time, and brightness of an image in the image measuring device according to a second embodiment of the present invention respectively, and
Fig. 6A to Fig. 6C are views each showing a relation among an indicated value, illuminance, an exposure time, and brightness of an image in the image measuring device according to a third embodiment of the present invention respectively.

## DETAILED DESCRIPTION OF PREFERRED EMBODIMENT(S)

Embodiments of the image measuring device according to the present invention are described in detail below with reference to the related drawings. It is to be noted that the same reference numerals are assigned to the same components and descriptions thereof are omitted herefrom or simplified.

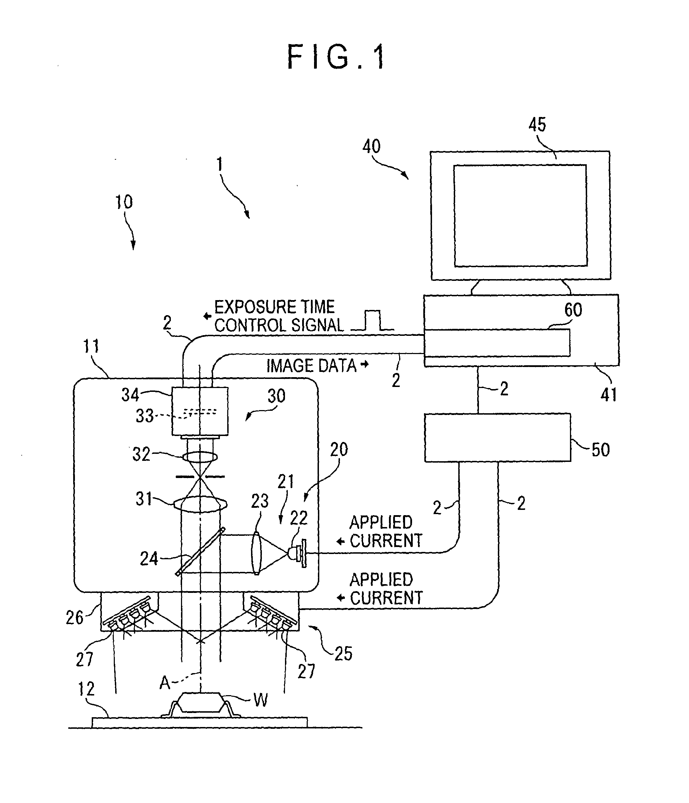

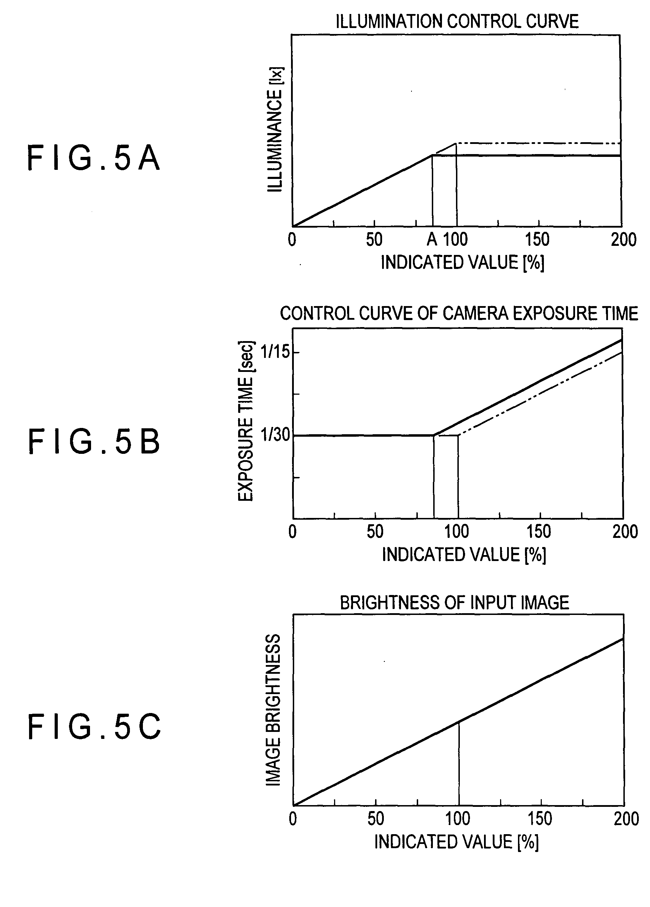

Fig. 1 to Fig. 4 show an image measuring device 1 according to a first embodiment of the present invention, and Fig. 5A to Fig. 6C show image measuring methods according to second and third embodiments of the present invention respectively.

[First Embodiment]

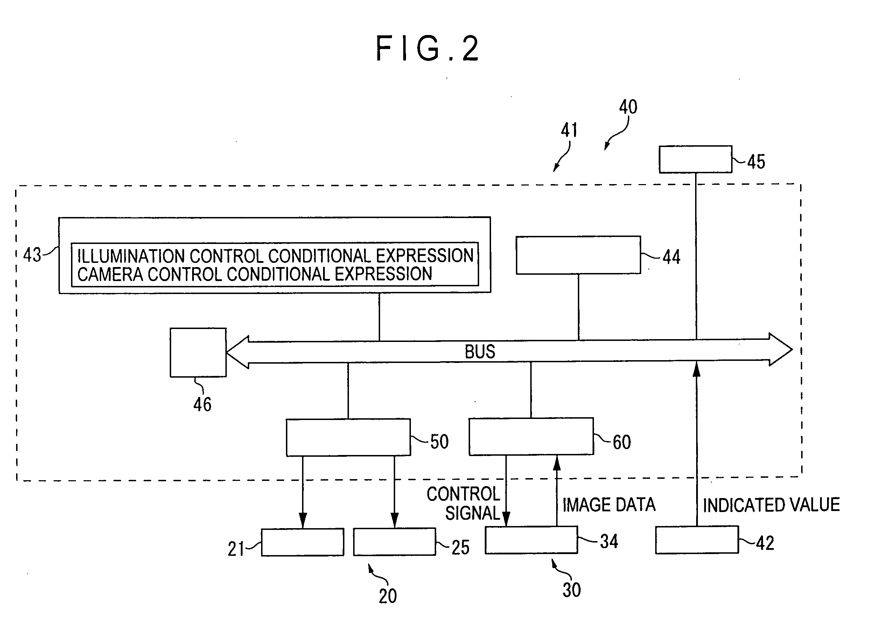

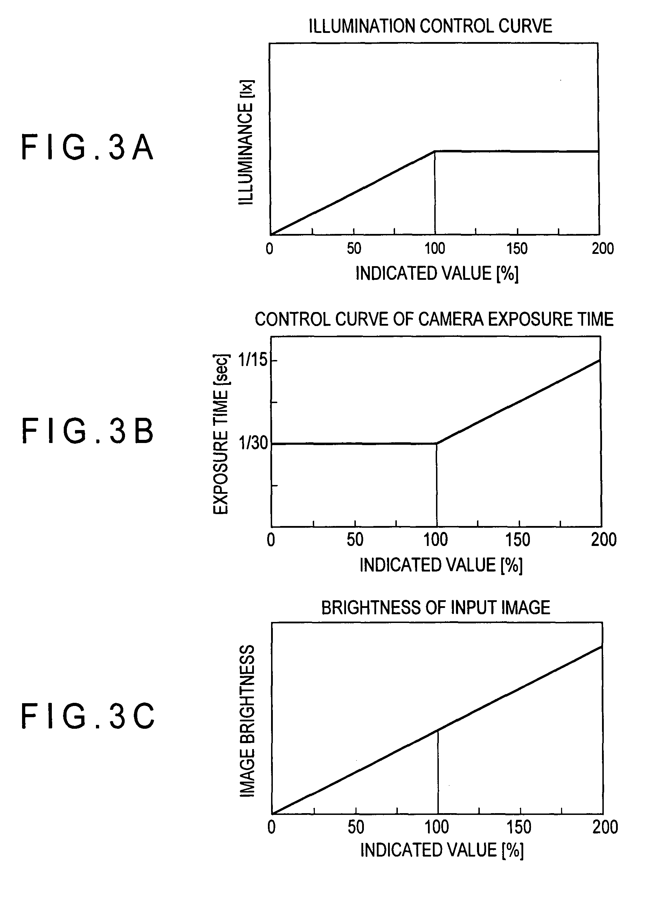

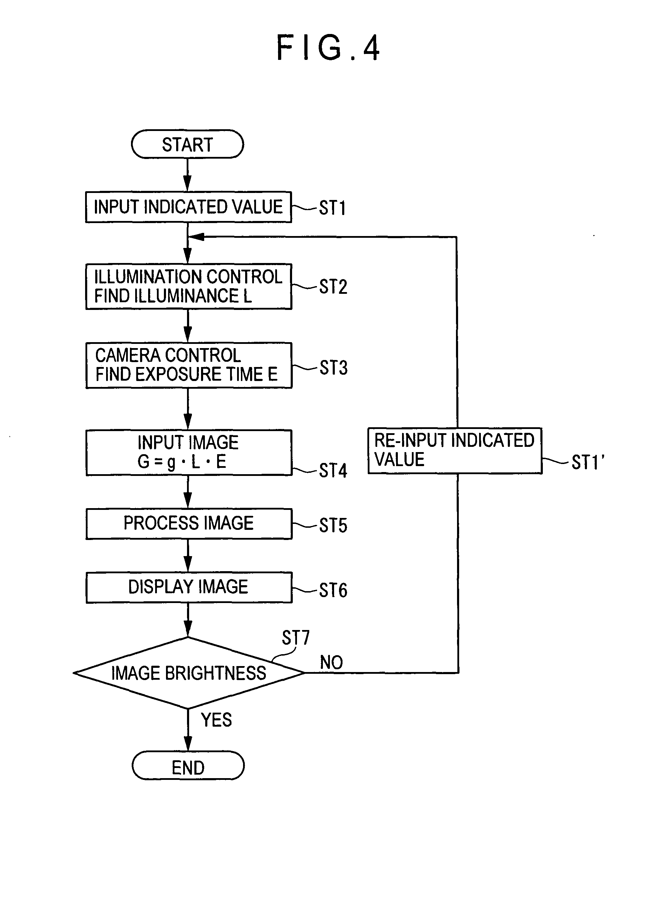

Fig. 1 is a view showing general configuration of the image measuring device 1 according to this embodiment. Fig. 2 is a block diagram showing configuration of the image measuring device 1. Fig. 3A to Fig. 3C are views each showing a relation among an indicated value, illuminance, an exposure time, and brightness of an image in the image measuring device 1. Fig. 4 is a flow chart showing an image measuring method in the image measuring device 1.

In Fig. 1, the image measuring device 1 comprises a device body 10 for irradiating illumination light to a workpiece W as a workpiece and picking up reflected light from the workpiece W, and a device controller 40 for processing an image of the workpiece W picked-up by this device body 10 and also controlling operations of the device body 10. The device body 10 and the device controller 40 are connected to each other via a cable 2.

The device body 10 comprises a housing 11 having a form like a hollow box, a stage 12 for placing the workpiece W thereon, an illumination unit 20 for irradiating illumination light to the workpiece W placed on the housing 11, and an image pick-up unit 30 provided inside the housing 11 for picking up an image of the workpiece W by receiving reflected light therefrom. Provided on a bottom surface opposite to the stage 12 on the housing 11 is an opening around an optical axis A perpendicular to an upper surface of the stage 12 and extending in the vertical direction, and the reflected light from the workpiece W reaches the image pick-up unit 30 through this opening. Further the housing 11 and the stage 12 can manually or automatically be moved in two directions on a plane crossing the optical axis A (directions X and Y), and in the direction along the optical axis A (direction Z), so that adjustment for a portion of the workpiece W to be measured or focus adjustment of the image pick-up unit 30 can be carried out.

The illumination unit 20 comprises a reflected illuminator 21 provided inside the housing 11 for irradiating illumination light from above the workpiece W along the optical axis A, and a diagonal illuminator 25 provided on a bottom surface of the housing 11 and around the optical axis A for irradiating a ring-formed beam of illumination light from the direction diagonal to the optical axis A to the workpiece W.

The reflected illuminator 21 comprises a halogen lamp 22 as a light-emitting source for irradiating illumination light in the direction perpendicular to the optical axis A, a lens 23 for focusing illumination light diffusing from the halogen lamp 22, and a half-mirror 24 provided on the optical axis A for reflecting the illumination light from the halogen lamp 22 toward the workpiece W.

The diagonal illuminator 25 comprises a hollow and ring-formed housing 26 around the optical axis A as a center, and a white light-emitting diode (LED) 27 provided inside the housing 26 as a light-emitting source. A plurality of LEDs 27 are provided in a ring from around the optical axis A.

The diagonal illuminator 25 is divided in four directions when viewed from the top, namely to a front section, a back section, a left section, and a right section. Amplitudes of illumination lights on the front section, back section, left section, and right section are controlled independently respectively.

The image pick-up unit 30 comprises condenser lenses 31, 32 provided along the optical axis A each for condensing reflected light from the workpiece W, and a CCD camera 34 having charge-coupled devices 33 for receiving light from the condenser lenses 31, 32.

The CCD camera 34 receives reflected light from the workpiece W with the charge-coupled device 33 to pick-up an image of the workpiece W. The picked-up image is image data consisting of a finite number of pixels, and the image size is, for instance, 512 x 512 pixels. Each pixel is, for instance, 8-bit data, and the 8-bit data indicates an amplitude of received light with one of gradation level (received light amplitude values) classified to 256 grades from 0 to 255. The image data from the CCD camera 34 is outputted via the cable 2 to the device controller 40.

The CCD camera 34 can fetch several dozens of frames, for instance, 30 frames of images successively within one second. Further in the CCD camera 34, the shutter speed can be changed and adjusted by specifying an exposure time by inputting a necessary parameter. The range of exposure time adjustment is, for instance, from 1/10000 second to 2 seconds.

The device controller 40 comprises a computer 41 for receiving image data from the CCD camera 34, subjecting the image data to image processing, and outputting the processed image data for display; an illumination controller 50 provided as a single body and separated from the computer 41 for adjusting luminance of the illumination unit 20 to control illumination of the workpiece W, and a frame grabber 60 as an exposure time controller integrated as the computer 41 for controlling an exposure time of the image pick-up unit 30. The illumination controller 50 controls illuminance of the workpiece W by receiving an indicated value from the computer 41 and adjusting a current applied to the illumination unit 20 to adjust luminance of the illumination unit 20. The frame grabber 60 receives an indicated value from the computer 41 and transmits an exposure time control signal to the image pick-up unit 30 to control an exposure time of the CCD camera 34.

The illumination controller may be integrated with the computer 41, and the exposure time controller may be provided as a signal body separated from the computer 41.

In Fig. 2, the computer 41 comprises an input section 42 for setting and inputting an indicated value instructing illuminance of the workpiece W an exposure time of the CCD camera 34 based on luminance of the illumination unit 20, and a memory 43 as a storage section for storing therein a relation among the indicated value, illuminance, and an exposure time. Further the computer 41 comprises an image processor 44 as an image processing unit for processing image data from the CCD camera 34, and a display unit (CRT) 45 as a display section for outputting and displaying a result of processing in the image processor 44. Further the computer 41 comprises a CPU (Central Processing Unit) 46 as a computing unit for controlling the entire device controller 40, and the CPU 46 is connected to the input section 42, memory 43, image processor 44, and CRT 45 via a bus.

The illumination unit 50 and the frame grabber 60 can be incorporated as a portion of functions installed in the computer 41 as the illumination controller (illumination control unit) 50 and the camera controller (frame grabber) 60. Further the configuration is allowable in which the illumination controller or the exposure time controller is stored as programmed software in the memory 43, and controls for illuminance and an exposure time are executed by computing the image data with the CPU 46 to transmit a control signal to the illumination unit 20 or the image pick-up unit 30.

The input section 42 comprises a lever, a button or the like exposed to the outside and manually operable. The input section 42 is used to input illuminance of the workpiece W and an exposure time of the image pick-up unit 30, for instance, in a range from 0% to 200%. The indicated value set and inputted in the input section 42 is transmitted via a bus to the CPU 46.

The CPU 46 reads out an illumination control conditional expression and an camera control conditional expression stored in the memory 43 and has the program for computing the expressions executed to compute illuminance of the workpiece W and an exposure time of the image pick-up unit 30 adapted to an indicated value sent from the input section 42. Then the CPU 46 instructs the computed illuminance to the illumination controller (illumination control unit) 50, and also instructs the computed exposure time to the camera controller (frame grabber) 60.

The illumination controller (illumination control unit) 50 receives an indicated value from the CPU 46, and makes each of the illuminators 21, 25 irradiate illumination light by applying a current corresponding to the indicated value to each of the light-emitting sources 22, 27 of the controllers 21, 25. The camera controller (frame grabber) 60 receives the indicated value from the CPU 46, and transmits a pulse with the pulse width corresponding to the instructed exposure time as a control signal (external trigger signal) to the CCD camera 34 to set a shutter speed of the CCD camera 34. With the operations as described above, an image of the workpiece W according to the controlled illuminance and exposure time is picked up with the CCD camera 34, and the image data is sent to the image processor 44.

The method of controlling an exposure time of the CCD camera 34 is not limited that in which an external trigger signal is transmitted to the CCD camera 34 via the frame grabber 60, and the configuration is allowable in which, with a camera having an exposure time control mechanism, information for an exposure time is transmitted from the computer 41 to the camera through an RS 232C cable or the like.

The image processor 44 processes the image data picked up by the CCD camera 34 to detect edges or the like, and computes a form, dimensions, and colors of the workpiece W by computing the image data.

The CRT 45 displays a result of image measurement computed by the image processor 44.

The illumination control conditional expression and the camera control conditional expression stored in the memory 43 are defined in this embodiment as described below.

Herein a prespecified indicated value is an indicated value (an indicated value for 100 %) corresponding to the maximum luminance in a range in which the light-emitting sources 22, 27 in the illumination unit 20 are generally used.

In the illumination control conditional expression, x indicates an indicated value, and in a range where the indicated value x is not larger than the 100% indicated value (X = 100), and in a range where the indicated value x is larger than the 100% indicated value, illuminance of the workpiece W based on luminance of the illumination unit is computed as described below respectively. In this step, "1" indicates the reference illuminance [1x], which is equal to 1/100 of the maximum illuminance corresponding to the maximum luminance in each of the light-emitting sources 22, 27.

Illuminance L in a case where the indicated value x is not larger than the 100% indicated value is computed through the following expression:

$$L = 1 \cdot x$$

Illuminance L in a case where the indicated value x is larger than the 100% indicated value is computed through the following expression:

$$L = 100 \cdot 1$$

A relation between an indicated value and illuminance as described above is indicated by an illumination control curve shown in Fig. 3A. Namely, illuminance is computed so that the illuminance increases with a constant increment up to prespecified illuminance (maximum illuminance) in proportion to an indicated value when the indicated value is not larger than the 100% indicated value, and also so that the illuminance is preserved at the maximum illuminance (100 · 1) previously set when the indicated value is larger than the 100% indicated value.

In the camera control conditional expression, x indicates an indicated value, the exposure time E is computed when the indicated value x is not larger than the 100% indicated value, and also when the indicated value x is larger than the 100% indicated value (x = 100) as described below respectively. In this step, "e" indicates the reference exposure time [sec], which is set to 1/30 sec corresponding to the general frame rate of 30 fps in the CCD camera 34.

The exposure time E in a case where the indicated value x is not larger than the 100% indicated value is computed as described below.

$$E = e$$

The exposure time E in a case where the indicated value x is larger than the 100% indicated value is computed through the following expression:

$$E = e \cdot x/100$$

The relation between an indicated value and an exposure time as described above is indicated by a camera exposure time control curve in Fig. 3B. Namely, the exposure time is computed so that the exposure time is preserved at a prespecified exposure time (1/30 sec) when the indicated value is not larger than the 100% indicated value, and also so that the exposure time increases with a constant increment in proportion to the indicated value when the indicated value is larger than the 100% indicated value. In this step, the exposure time is set to 1/15 sec in response to the indicated value of 200% which is two times longer than the constant exposure time (1/30 sec) described above.

Brightness of an image picked up by the CCD camera 34 is decided from the illuminance L and the exposure time E computed through the illumination control conditional expression and the camera control conditional expression as described above. Namely the brightness G of the image is in proportion to a product of the illuminance L and the exposure time E as well as to g which is a constant decided by a gain in the CCD camera 34 and the number of apertures (NA) of the condenser lenses 31, 32, and is computed through the following expression (1)

$$G = g \cdot L \cdot E \qquad (1)$$

The brightness G of an image when the indicated value x is not larger than the 100% indicated value is computed by substituting the illuminance L and the exposure time E into the expression (1) through the following expression:

$$G = g \cdot 1 \cdot e \cdot x$$

The brightness G of an image when the indicated value x is larger than the 100% indicated value is computed through the following expression:

$$G = g \cdot 1001 \cdot e \cdot x/100 = g \cdot 1 \cdot e \cdot x$$

The relation between an indicated value and brightness of an image is expressed by the common expression ($G = g \cdot 1 \cdot e \cdot x$) as described above irrespective of a range of an indicated value and is computed in proportion to the indicated value x. Namely, as shown in Fig. 3C, brightness of an image continuously increases with a constant increment in the entire range of indicated values.

Then the image measuring method in the image measuring device 1 is described with reference to a flow chart shown in Fig. 4.

At first, an indicated value is inputted from the input section 42 (ST1).

When an indicated value is inputted, the CPU 46 reads out the illumination control conditional expression from the memory 43, and computes the illuminance L of the workpiece W (luminance of the illumination unit 20) based on the indicated value x (ST2), and then the CPU 46 reads out the camera control conditional expression from the memory 43, and computes the exposure time E of the image pick-up unit 30 based on the indicated value x (ST3). Namely, the illumination computing step comprises the step ST2, and the exposure time computing step comprises the step ST3.

Then luminance of the illumination unit 20 and the CCD camera 34 are controlled according to the computed illuminance L and exposure time E, and illumination light is irradiated to the workpiece W, an image of the workpiece W is picked up by the CCD camera 34, and the picked-up image data is inputted into the image processor 44 (ST4). Then the image processor 44 executes image processing (ST5) with a result of image measurement displayed on the CRT 45 (ST6).

Then in step ST7, a measuring person visually checks brightness of an image which is the displayed result of image measurement, and determines whether the image brightness is acceptable or not. When it is determined that the image brightness is acceptable, namely that image information for the workpiece W (the form, dimensions, colors and the like) is displayed with the sufficiently recognizable brightness, measurement is finished. On the other hand, when it is determined that the image brightness is not acceptable, namely that the displayed image is dark and detection of edges or the like can not be executed sufficiently, or when the displayed image is too bright and the image can not visually be identified sufficiently, an indicated value is inputted again (ST1'), and the measurement is continued.

In the image measuring method as described above, the operation for inputting again an indicated value (ST1') according to a result of determination as to acceptability of the image brightness (ST7) can be executed successively. Namely, the CCD camera 34 can fetch several dozens of image frames successively, and also can successively process images of the workpiece W fetched as described above with the image processor 44 and successively displayed the processes images on the CRT 45. The measuring person can successively input and update indicated values by monitoring the images as results of measurement successively displayed on the CRT 45 and operating the input section 42. Because of the feature, the operations from step ST1' to ST7 can successively be carried out in repetition until brightness of an image picked up based on the illuminance and an exposure time based on the indicated value inputted again becomes acceptable.

Any frame rate of images successively displayed on the CRT45 is allowable on the condition that the frame rate is around 7.5 fps or more, and therefore the exposure time can be prolonged up to about four times of 1/30 sec (up to 1/7.5 sec).

In the embodiment described above, the following advantages are provided.

(1) The illuminance L of the workpiece W and the exposure time E of the image pick-up unit 30 are computed based on an indicated value x inputted from the input unit 42, the illumination unit 20 and the image pick-up unit 30 are controlled according to the illuminance L and exposure time E computed as described above to pick up an image with prespecified brightness. Therefore, even if the illuminance L of the workpiece W is not raised to the maximum luminance of the light-emitting sources 22, 27 in the illumination unit 20 or more, an image with the brightness higher than that of an image obtained at the maximum luminance of the light-emitting sources 22, 27 can be obtained by prolonging the exposure time E of the CCD camera 34.

(2) As the illuminance L of the workpiece W and the exposure time E of the image pick-up unit 30 are automatically computed, in response to an indicated value, through the illumination control conditional expression and the camera control conditional expression, and the brightness G of a picked-up image can be changed, so that it is not necessary for a measuring person to control the illumination unit 20 or the image pick-up unit 30 discretely, and a workpiece for image measurement can be carried out only with the simple operation for imputing an indicated value x.

(3) The illuminance L and the exposure time E are controlled so that the parameters will increase with a constant increment for an indicated value x respectively, and also the brightness G of an image continuously increases with a constant increment against the indicated value x, so that a relation between the inputted indicated value x and the image brightness obtained according to this indicated value x can easily be grasped by the measuring person, and an image with acceptable brightness can be obtained with quick operations, thus the improved operability being obtained.

(4) As the prespecified indicated value is that corresponding to the maximum value of the light-emitting source (100% indicated value), when the indicated value x is not larger than the 100% indicated value, the illuminance L of the workpiece W is controlled within a range up to the maximum illuminance according to the indicated value x, and when the indicated value x is larger than 100% indicated value, the illuminance L of the workpiece W is kept constant at the maximum illuminance. Therefore, as the illuminating capability of the illumination unit 20 can be utilized to its full extent, so that efficient illumination can be carried out.

(5) As the light-emitting source of the diagonal illuminator 25 comprises a plurality of LEDs 27, a higher control speed, smaller power consumption, and longer service life can be realized as compared to those realized when a halogen lamp is used.

(6) As the CCD camera 34 is used as the image pick-up unit 30, an image of the workpiece W picked-up with the CCD camera 34 can quickly be transferred as image data to subject the data to the image processing, so that the efficiency in measurement can be improved. Further, in the CCD camera 34, it is easy to control an exposure time with an electric control signal, so that control over an exposure time can be carried out more accurately as compared to an ordinary camera having a mechanical shutter device or the like.

(7) Further, in the CCD camera 34, images can successively be picked up at a constant frame rate, so that the steps from input of an indicated value x up to checking of image brightness can be carried out successively in repetition, and therefore the efficiency in measurement can further be improved.

(8) Illuminance L and an exposure time E can be computed instantly according to an indicated value x inputted from the input section 42 by computing the illuminance L and exposure time E with the CPU 46 based on a relation among an indicated value x. illuminance L, and an exposure time E stored in the memory 43 in the computer 41, so that a time required for measurement can be shortened, whereby the workpiece efficiency for image measurement can be improved.

[Second Embodiment]

Next a second embodiment of the present invention is described with reference to Fig. 5A to Fig. 5C.

Fig. 5A to Fig. 5C show a relation among an indicated value, illuminance, an exposure time, and brightness of an image in this embodiment.

Configuration of the image measuring device 1 and the image measuring method in this embodiment are substantially the same as those described in the first embodiment above, and is different from the first embodiment only in the expression for setting a relation among the indicated value x, illuminance L, and exposure time E. The difference is described in detail below.

The illumination control conditional expression for computing the illuminance L of the workpiece W and the camera control conditional expression for computing the exposure time E of the image pick-up unit 30 are defined in this embodiment as described below.

The prespecified indicated value is that (indicated by the sign A in Fig. 5A) corresponding to luminance lower by a prespecified percentage as compared to the maximum luminance in a range in which the light-emitting sources 22, 27 in the illumination unit are generally used. The luminance lower by a prespecified percentage is, for instance, that lower by A% as compared to the maximum luminance (A% illuminance), and an indicated value corresponding to the A% illuminance is an A% indicated value.

In the illumination control conditional expression, when the indicated value x is not larger than the A% indicated value (x = A), and at the same time when the indicated value x is larger than the A% indicated value, the illuminance L is computed as described below respectively.

When the indicated value x is not larger than the A% indicated value, the illuminance L is computed through the following expression:

$$L = 1 \cdot x$$

When the indicated value x is larger than the A% indicated value, the illuminance L is computed through the following expression:

$$L = A \cdot 1$$

The relation between an indicated value and illuminance is as indicated by the illumination control curve in Fig. 5A. Namely, the illuminance L is computed so that the illuminance increases with a constant increment up to the preset illuminance (A% illuminance) in proportion to an indicated value when an indicated value is not larger than the A% indicated value, and also so that the illuminance is preserved at the preset illuminance (A% illuminance) when the indicated value is larger than the A% indicated value.

In the camera control conditional expression, when the indicated value x is not larger than the A% indicated value (x = A), and when the indicated value x is larger than the A% indicated value, the exposure time E is computed as described below respectively.

When the indicated value x is not larger than the A% indicated value, the exposure time E is computed through the following expression:

$$E = e$$

When the indicated value x is larger than the A% indicated value, the exposure time E is computed through the following expression:

$$E = e \cdot x/A$$

The relation between an indicated value and an exposure time as described above is as indicated by the camera exposure time control curve shown in Fig. 5B. Namely, the exposure time E is computed so that the exposure time is preserved at the preset exposure time e (for instance, 1/30 sec) when the indicated value is not larger than the A% indicated value, and also so that the exposure time will increase with a constant increment in proportion to an indicated value when the indicated value is larger than the A% indicated value.

By substituting the illuminance L and the exposure time E computed through the illumination control conditional expression and the camera control conditional expression into the expression (1) above, brightness of the image is computed as described below.

The brightness G of an image when the indicated value x is not larger than the A% indicated value is computed through the following expression:

$$G = g \cdot 1 \cdot e \cdot x$$

The brightness G of an image when the indicated value x is larger than the A% indicated value is computed through the following expression:

$$G = g \cdot A \cdot 1 \cdot e \cdot x/A = g \cdot 1 \cdot e \cdot x$$

As described above, the relation between an indicated value and brightness of an image is expressed by a common expression (G = g · 1 · e · x) irrespective of a range of an indicated value like in the first embodiment, and as shown in Fig. 5C, brightness of an image continuously increases with a constant increment in the entire range of the indicated value.

For instance, when the A% above is set to 80%, if the exposure time of the image pick-up unit 30 is set to 1/30 sec when the indicated value is not larger than the 80% indicated value, the exposure time is about 1/24 sec which is longer by about 20% than that for the 100% indicated value. Therefore, the frame rate lowers by about 24 fps (corresponding to that at the exposure time of 1/24 sec) for the 100% indicated value, but any problem occurs in the practical use, and operations for image measurement can smoothly be carried out.

With the embodiment described above, in addition to the advantages described above, the following advantage is provided.

(9) Even when only the luminance lower by a prespecified percentage (A%) than the maximum luminance can be obtained due to individual differences of the light-emitting sources 22, 27 in the illumination unit 20, the brightness G of an image can be obtained for the indicated value x larger than the A% indicated value by controlling the exposure time E of the image pick-up unit 30, so that the influence by non-uniformity of the light-emitting sources 22, 27 as products can be suppressed.

[Third Embodiment]

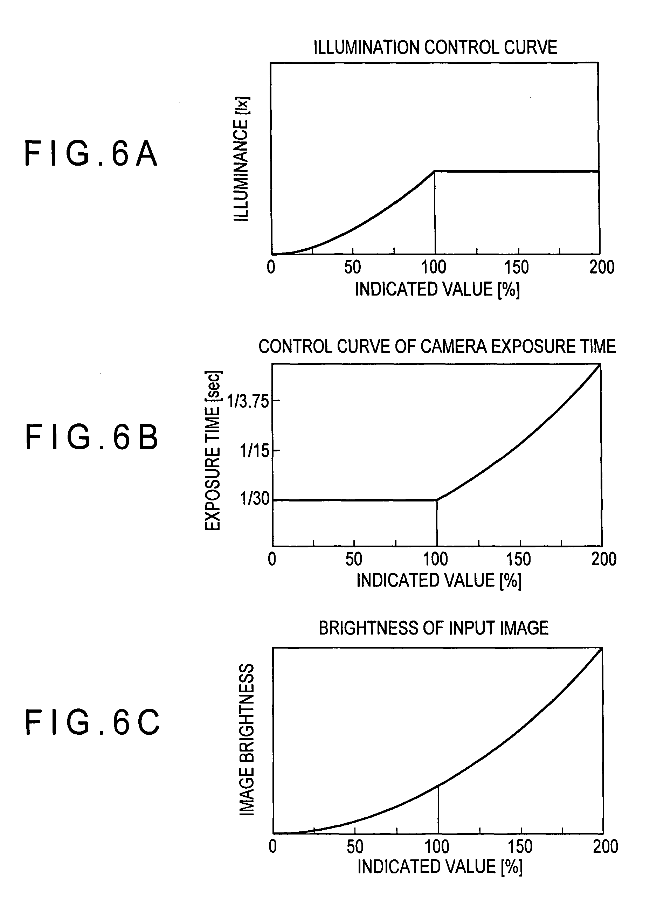

Next a third embodiment of the present invention is described with reference to Fig. 6A to Fig. 6C below.

Fig. 6A to Fig. 6C are views each showing a relation among an indicated value, illuminance, an exposure time, and brightness of an image.

Configuration of the image measuring device 1 and the image measuring method in this embodiment are the substantially same as those in the first embodiment described above, but are different from the first embodiment only in the expression for computing a relation among an indicated value x, illuminance L, an exposure time, and brightness of an image. The difference is described in detail below.

The illumination control conditional expression for computing illuminance L of a workpiece W and the camera control conditional expression for computing an exposure time E of the image pick-up unit 30 are defined in this embodiment as described below.

The prespecified indicated value is that corresponding to the maximum luminance in a range where the light-emitting sources 22, 27 in the illumination unit 20 are generally used (100% indicated value).

In the illumination control conditional expression, when the indicated value x is not larger than the 100% indicated value (x = 100), and when the indicated value x is larger than the 100% indicated value, the illuminance L is computed as described below respectively.

When the indicated value x is not larger than the 100% indicated value, the indicated value x is computed through the following function:

$$L = 1(x)$$

When the indicated value x is larger than the 100% indicated value, the illuminance L is computed as a constant value obtained by substituting 100 for x in the function 1 (x) through the following function:

$$L = 1(100)$$

The relation between an indicated value and illuminance is indicated by the illumination control curve shown in Fig. 6A. Namely the illuminance L is computed so that the illuminance increases with a increment along the curve defined by the function 1 (x) according to an indicated value up to the maximum illuminance when the indicated value is not larger than the 100% indicated value, and also so that the illuminance is preserved at the present illuminance (maximum illuminance) when the indicated value is larger than the 100% indicated value.

In the camera control conditional expression, when the indicated value x is not larger than the 100% indicated value (x = 100), and when the indicated value x is larger than the 100% indicated value, the exposure time E is computed as described below respectively.

When the indicated value x is not larger than the 100% indicated value, the exposure time E is computed through the following expression:

$$E = e$$

When the indicated value x is larger than the 100% indicated value, the exposure time E is computed through the following expression.

$$E = e \cdot 1(x)/1(100)$$

The relation between an indicated value and an exposure time is indicated by the camera exposure time control curve shown in Fig. 6B. Namely, the exposure time E is computed so that the exposure time is preserved at a preset exposure time e (for instance, 1/30 sec) when the indicated value is not larger than the 100% indicated value, and also so that the exposure time will increase with an increments along a curve defined by the function 1 (x) according to an indicated value when the indicated value is larger than the 100% indicated value.

The brightness G of an image is computed by substituting the illuminance L and exposure time E computed through the illumination control conditional expression and through the camera control conditional expression respectively into the expression (1) above as described below.

When the instruction x is not larger than the 100% indicated value, the brightness G of an image is computed through the following expression:

$$G = g \cdot e \cdot 1(x)$$

When the indicated value x is larger than the 100% indicated value, the brightness G of an image is computed through the following expression:

$$G = g \cdot 1(100) \cdot e \cdot 1(x)/1(100) = g \cdot e \cdot 1(x)$$

As described below, the relation is expressed by the common expression (G = g · e · 1 (x)) irrespective of a range of an indicated value like in the first embodiment described above, and the brightness of an image continuously increases with an increment along the curve defined by the function 1 (x) according to an indicated value. The function 1 (x) draws a curve having a downward convex form, and the increment becomes smaller in a region when the indicated value is small (dark). Namely, brightness of an image can be controlled finely even in a dark region.

The function 1 (x) is not limited to that giving a downward convex form, and may be that giving an upward convex form, and also the curvature may be inverted according to an indicated value.

With the embodiment as described above, the following advantages are provided in addition to those described above.

(10) As the brightness G of an image can be controlled finely even in a dark region, so that precision in measurement can be improved. For instance, when a reflection coefficient of a surface of the workpiece W is high and illumination light from the reflected illuminator 21 is completely reflected on the surface and is introduced into the CCD camera 34, if the illumination light is too bright, halation may occur on the picked-up image, but as fine adjustment is possible in a dark region, an image of even the workpiece W as described above can be picked up with the appropriate brightness.

The image measuring method and image measuring device according to the present invention are not limited to those described in the embodiments described above, and various changes and modification can be made within departing from the gist of the present invention.

For instance, although the image measuring device 1 comprises the device body 10 and the device controller 40 which are discrete bodies respectively in each of the embodiments described above, but the present invention is not limited to this configuration, and the configuration is allowable in which the device body and the device controller are integrated with each other. Further, although the illumination unit 20 and the image pick-up unit 30 are integrated with the device body 10 in each of the embodiments described above, but the configuration is allowable in which the illumination unit or the image pick-up unit is provided as a single body.

In each of the embodiments described above, illuminance of a workpiece W is adjusted by the illumination controller 50 controlling a current applied to the halogen lamp 22 or the light-emitting diode 27 which is a light-emitting source for the illumination unit 20 to adjust luminance of the illumination unit 20, but the present invention is not limited to the configuration, and the configuration is allowable in which luminance of the illumination unit is adjusted by increasing or reducing a number of the light-emitting sources.

In each of the embodiments described above, the device controller 40 has the computer 41 comprising the memory 43, the image processor 44, or the CPU 46, but the present invention is not limited to this configuration, and a storage device or a computing device may be provided as a single body respectively. The device controller 40 is not limited to that connected via a cable to the device body 10, and the device controller 40 may have the configuration in which transactions of control signals and image data are carried out with a radio communication device or the like.

Further in each of the embodiments described above, the illumination unit 20 comprises the reflected illuminator 21 and the diagonal illuminator 25, but the present invention is not limited to this configuration, and only either one of the components may be provided, and further a device for transmitted illumination for irradiating illumination light from the lower side of the stage 12 toward an image pick-up unit through the workpiece W may be employed. When the transmitted illumination device as described above is employed, it is desirable that illuminance of the transmitted illumination can be controlled.

## Claims

1.  An image measuring method, with use of a luminance-variable illumination unit and an image pick-up unit with variable exposure time, wherein an illumination light is irradiated from the illumination unit to a workpiece, and a reflected light from and/or transmitted light through the workpiece is picked up by the image pick-up unit, so that the workpiece is measured based on a picked-up image, the method comprising:

    an illuminance computing step of obtaining illuminance of the workpiece based on luminance of the illumination unit according to an indicated value set and inputted from the outside; and an exposure time computing step of computing an exposure time for the image pick-up unit,

    wherein, in the illuminance computing step, the illuminance is computed so that the illuminance increases up to a preset illuminance in association with increase of the indicated value when the indicated value is not higher than a prespecified indicated value, and the illuminance is kept at the preset illuminance when the indicated value is higher than the prespecified indicated value, and

    wherein in the exposure time computing step, the exposure time is computed so that the exposure time is kept at at a preset exposure time when the indicated value is not higher than a prespecified indicated value, and the exposure time increases from the preset exposure time in association with increase of the indicated value when the indicated value is higher than the prespecified indicated value, and

wherein the illumination unit and the image pick-up unit are controlled according to the computed illuminance and computed exposure time for picking up the image having specified brightness obtained from a combination of the illuminance and the exposure time.

2. The image measuring method according to claim 1, wherein

in the illuminance computing step, when the indicated value is not higher than the prespecified indicated value, the illuminance is computed so that the illuminance increases with a constant increment according to the indicated value, and

in the exposure time computing step, when the indicated value is higher than the prespecified indicated value, the exposure time is computed so that the exposure time increases with a constant increment according to the indicated value and also so that brightness of the image obtained by the combination of the computed illuminance and the computed exposure time continuously increases with a constant increment according to the indicated value.

3. The image measuring method according to claim 1, wherein

in the illuminance computing step, when the indicated value is not higher than the prespecified indicated value, the illuminance is computed so that the illuminance increases with an increment along a curve defined by a prespecified function according to an increment of the indicated value, and

in the exposure time computing step, when the indicated value is higher than the prespecified indicated value, the exposure time is computed so that the exposure time increases with an increment along a curve defined by a prespecified function according to an increment of the indicated value and also so that brightness of the image obtained by the combination of the computed illuminance and the computed exposure time continuously increases with an increment along a curve defined by a prespecified function according to the indicated value.

4. The image measuring method according to any one of claims 1 to 3, wherein the prespecified indicated value corresponds to a maximum luminance in a range where the illumination unit is generally used.

5. The image measuring method according to any one of claims 1 to 3, wherein the prespecified indicated value corresponds to a luminance lower by a prespecified percentage against the maximum luminance in the range where the illumination unit is generally used.

6. An image measuring device comprising a luminance-variable illumination unit and an image pick-up unit with variable exposure time, wherein an illumination light is irradiated from the illumination unit to a workpiece, and a reflected light from and/or transmitted light through the workpiece is picked up by the image pick-up unit, so that the workpiece is measured based on a picked-up image, the image measuring device further comprising:

an illuminance controller for controlling illuminance of the workpiece based on luminance of the illumination unit according to an indicated value set and inputted from the outside; and an exposure time controller for controlling an exposure time for the image pick-up unit, wherein the illuminance controller controls the illumination unit so that the illuminance increases up to a preset illuminance in association with increase of the indicated value when the indicated value is not higher than a prespecified indicated value, and also so that the illumination is kept at the preset illuminance when the indicated value is higher than the prespecified indicated value, and

the exposure time controller controls the image pick-up unit so that the exposure time is kept at a preset exposure time when the indicated value is not higher than a prespecified indicated value, and also so that the exposure time increases from the preset exposure time in association with increase of the indicated value when the indicated value is larger than the prespecified indicated value.

7. The image measuring device according to claim 6, wherein

when the indicated value is not higher than the prespecified indicated value, the illuminance controller controls the illumination unit so that the illuminance increases with a constant increment according to the indicated value, and

when the indicated value is higher than the prespecified indicated value, the exposure time controller controls the image pick-up unit so that the exposure time increases with a constant increment according to the indicated value and also so that brightness of the image obtained by the combination of the computed illuminance and the computed exposure time continuously increases with a constant increment according to the indicated value.

8. The image measuring device according to claim 6, wherein

when the indicated value is not higher than the prespecified indicated value, the illuminance controller controls the illumination unit so that the illuminance increases with an increment along a curve defined by a prespecified function according to the indicated value, and

when the indicated value is higher than the prespecified indicated value, the exposure time controller controls the image pick-up unit so that the exposure time increases with an increment along a curve defined by a prespecified function according to an increment of the indicated value and also so that brightness of the image obtained by the combination of the computed illuminance and the computed exposure time continuously increased along a curve defined by a prespecified function according to the indicated value.

9. The image measuring device according to any one of claims 6 to 8, wherein the illumination unit comprises a plurality of semiconductor light-emitting elements.

10. The image measuring device according to any one of claims 6 to 9, wherein the image pick-up unit comprises a camera having a solid state image pick-up element.

11. The image measuring device according to any one of claims 6 to 10 further comprising a computer including:

an input unit for inputting the indicated value;
a storage unit for storing therein a relation among the indicated value, the illuminance, and the exposure time when the illumination unit and the image pick-up unit are controlled;
a computing unit for computing illuminance and exposure time based on an indicated value inputted with the input unit as well as on the relation among the indicated value, the illuminance, and the exposure time stored in the storage unit;
an image processor for processing the picked-up image; and
a display unit for displaying thereon the image processed by the image processor,

wherein
the illuminance controller is integrated with the computer or is separately provided and controls the illumination unit according to the illuminance computed by the computing unit; and
the exposure time controller is integrated with the computer or is separately provided and controls the image pick-up unit according to the exposure time computed by the computing unit.

# FIG.1

EXPOSURE TIME
CONTROL SIGNAL

IMAGE DATA →

APPLIED
← CURRENT

APPLIED
← CURRENT

# FIG.2

ILLUMINATION CONTROL CONDITIONAL EXPRESSION
CAMERA CONTROL CONDITIONAL EXPRESSION

BUS

CONTROL SIGNAL

IMAGE DATA

INDICATED VALUE

EP 1 486 758 A2

**FIG.3A**

ILLUMINATION CONTROL CURVE

**FIG.3B**

CONTROL CURVE OF CAMERA EXPOSURE TIME

**FIG.3C**

BRIGHTNESS OF INPUT IMAGE

# FIG.4

```
                    ┌──────────┐
                    │  START   │
                    └────┬─────┘
                         ↓
          ┌──────────────────────────┐
          │  INPUT INDICATED VALUE   │──ST1
          └──────────────┬───────────┘
                         ↓ ←──────────────────────────┐
          ┌──────────────────────────┐                │
          │  ILLUMINATION CONTROL    │──ST2           │
          │  FIND ILLUMINANCE L      │                │
          └──────────────┬───────────┘                │
                         ↓                             │
          ┌──────────────────────────┐                │
          │  CAMERA CONTROL          │──ST3           │
          │  FIND EXPOSURE TIME E    │                │
          └──────────────┬───────────┘                │
                         ↓                  ┌──────────────────────┐
          ┌──────────────────────────┐      │ RE-INPUT INDICATED   │
          │  INPUT IMAGE             │      │ VALUE                │──ST1'
          │  G = g · L · E           │──ST4 └──────────┬───────────┘
          └──────────────┬───────────┘                 │
                         ↓                              │
          ┌──────────────────────────┐                 │
          │  PROCESS IMAGE           │──ST5            │
          └──────────────┬───────────┘                 │
                         ↓                              │
          ┌──────────────────────────┐                 │
          │  DISPLAY IMAGE           │──ST6            │
          └──────────────┬───────────┘                 │
                         ↓              ST7             │
                    ╱─────────────╲         NO          │
                  ╱  IMAGE BRIGHTNESS ╲─────────────────┘
                    ╲─────────────╱
                         │ YES
                         ↓
                    ┌──────────┐
                    │   END    │
                    └──────────┘
```

$$G = g \cdot L \cdot E$$

FIG.5A

ILLUMINATION CONTROL CURVE

FIG.5B

CONTROL CURVE OF CAMERA EXPOSURE TIME

FIG.5C

BRIGHTNESS OF INPUT IMAGE

ILLUMINATION CONTROL CURVE

FIG.6A

ILLUMINANCE [lx]

INDICATED VALUE [%]

CONTROL CURVE OF CAMERA EXPOSURE TIME

FIG.6B

EXPOSURE TIME [sec]

1/3.75

1/15

1/30

INDICATED VALUE [%]

BRIGHTNESS OF INPUT IMAGE

FIG.6C

IMAGE BRIGHTNESS

INDICATED VALUE [%]